Europäisches Patentamt

European Patent Office

Office européen des brevets

(11) Numéro de publication: **0 281 834**
**A2**

## (12) DEMANDE DE BREVET EUROPEEN

(21) Numéro de dépôt: 88102659.5

(22) Date de dépôt: 24.02.88

(51) Int. Cl.⁴: **F16K 1/30** , F16K 41/10 ,
F17C 13/04

(30) Priorité: 09.03.87 LU 86801

(43) Date de publication de la demande:
14.09.88 Bulletin 88/37

(84) Etats contractants désignés:
BE DE FR GB IT NL

(71) Demandeur: CEODEUX S.A.
24 rue de Diekirch
L-7440 Lintgen(LU)

(72) Inventeur: Kerger, Léon
31 rue Robert Schuman
L-7382 Helmdange(LU)
Inventeur: Kremer, Paul
72 rue du Nord
L-7242 Walferdange(LU)

(74) Mandataire: Meyers, Ernest et al
Office de Brevets Freylinger & Associés 46
rue du Cimetière B.P. 1153
L-1011 Luxembourg(LU)

(54) **Robinet pour gaz comprimés ou liquéfiés.**

(57) Le robinet comprend un corps (10) renfermant un organe de fermeture avec au moins une surface d'étanchéité à l'intersection d'au moins un canal d'admission (16) et d'au moins un canal de sortie des gaz (18), un moyen de manoeuvre extérieur (12) relié à travers le corps (10) audit organe de fermeture pour déplacer celui-ci contre l'action d'un ressort (58) entre une position d'ouverture et une position de fermeture. L'organe de fermeture est monté, de façon flottante, entre deux membranes d'étanchéité métalliques flexibles (40, 42), dont l'une subit l'action du moyen de manoeuvre (12) par l'intermédiaire d'une tige axiale (48) et dont l'autre subit l'action d'un ressort (58) du côté opposé à celui dudit organe de fermeture.

# ROBINET POUR GAZ COMPRIMES OU LIQUEFIES

La présente invention concerne un robinet pour gaz comprimés ou liquéfiés comprenant un corps renfermant un organe de fermeture avec au moins une surface d'étanchéité à l'intersection d'au moins un canal d'admission et d'au moins un canal de sortie des gaz, un moyen de manoeuvre extérieur relié, à travers le corps, audit organe de fermeture pour déplacer celui-ci, contre l'action d'un ressort, entre une position d'ouverture et une position de fermeture.

Quoique n'y étant pas limitée, l'invention vise plus particulièrement des robinets pour des bouteilles à gaz ou des conduites de gaz utilisées p.ex. dans la fabrication de fibres optiques ou dans la technique des semi-conducteurs, notamment pour le dopage de ceux-ci. Ces gaz doivent être d'une pureté quasi absolue, car la moindre impureté, solide, liquide ou gazeuse, aussi microscopique soit-elle, peut perturber le processus de dopage et de fabrication de ces matériaux. En outre, ces gaz peuvent être corrosifs, voire toxiques.

Or, la mobilité de certains éléments dans les robinets prévus pour les conduites de ce type de gaz, notamment les frictions entre des éléments mobiles, peuvent suffire à libérer des particules qui, lorsque celles-ci sont entraînées par ces gaz, rendent ceux-ci inutilisables. Il faut donc que ces gaz, lors de leur passage à travers ces robinets, rencontrent aussi peu que possible d'éléments mobiles, notamment des ressorts ou des organes d'étanchéité à friction. En outre, ces robinets doivent être conçus de manière à éliminer, ou du moins à minimiser, tout risque de fuite vers l'extérieur, notamment dans le cas des gaz corrosifs ou toxiques.

Les critères fixés par les utilisateurs de ces robinets sont tellement élevés que les robinets existants, dans la plupart des cas, ne répondent plus à ces exigences. Par conséquent, le but de la présente invention est de prévoir un nouveau robinet qui remplit mieux les conditions imposées par les utilisateurs.

A cet effet, l'invention propose un robinet du genre décrit dans le préambule qui, dans un mode de réalisation préféré, est essentiellement caractérisé en ce que l'organe de fermeture est monté de façon flottante entre deux membranes d'étanchéité métalliques flexibles, dont l'une subit l'action du moyen de manoeuvre par l'intermédiaire d'une tige axiale et dont l'autre subit l'action d'un ressort du côté opposé à celui dudit organe de fermeture.

Cet organe de fermeture est avantageusement constitué de deux pistons symétriques reliés entre eux par une tige à travers un étranglement du corps du robinet au niveau desdits canaux, ces deux pistons se trouvant dans des chambres sensiblement cylindriques de part et d'autre dudit étranglement.

Au moins un desdits pistons est pourvu d'une surface d'étanchéité coopérant avec un siège formé par le bord juxtaposé dudit étranglement. Dans un mode de réalisation préféré, les deux pistons sont pourvus de telles surfaces d'étanchéité.

Chacun des sièges est, de préférence, formé par une surface conique qui s'ouvre dans la chambre du piston associé.

Les surfaces d'étanchéité des pistons peuvent être en métal mou ou en matère synthétique.

Le ou les canaux d'admission pénètrent dans le corps du robinet au niveau de l'étranglement, tandis que les canaux de sortie quittent le corps du robinet au niveau des chambres ou vice versa.

La membrane subissant l'action d'un ressort est, de préférence, reliée à celui-ci par un cylindre à tête bombée.

Le guidage de l'organe de fermeture peut être assuré par des segments circulaires de guidage sur les pistons. Toutefois, pour réduire encore davantage les contacts de friction, ce guidage de l'organe de fermeture peut être assuré par une liaison entre chaque piston et sa membrane dont il subit l'action.

Ce guidage peut également être assuré par le positionnement de l'organe de fermeture entre les membranes opposées, auquel cas les surfaces en contact avec les membranes de part et d'autre de celles-ci présentent des profils complémentaires.

D'autres particularités et caractéristiques ressortiront de la description d'un mode de réalisation préféré, présenté ci-dessous, à titre d'illustration, en référence aux figures annexées, dans lesquelles :

La figure 1 montre schématiquement une vue extérieure d'un robinet et

La figure 2 montre schématiquement une vue en coupe longitudinale à travers ce même robinet.

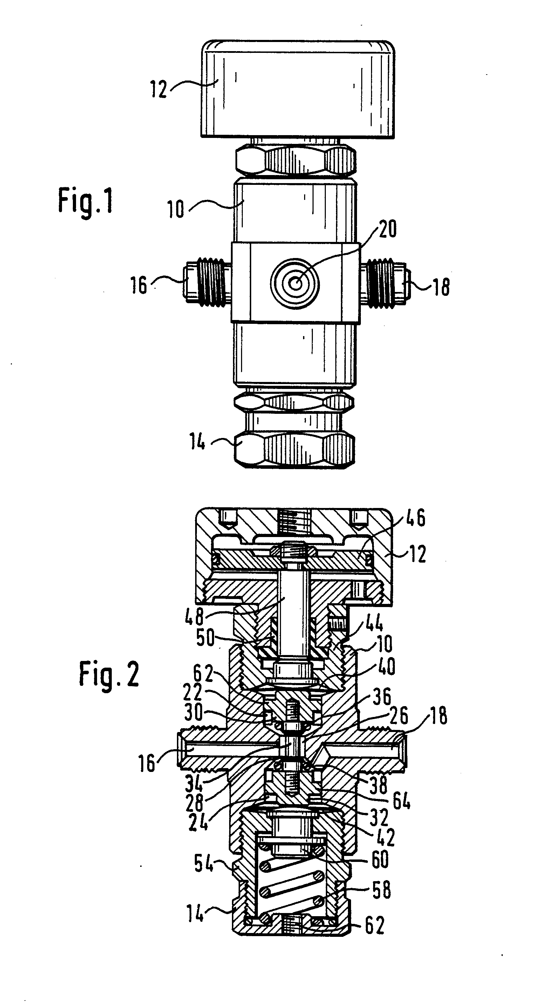

Le robinet représenté sur les figures 1 et 2 comporte un corps 10, par exemple en acier inoxydable ou en laiton, sur lequel est vissé une tête 12 contenant un moyen de manoeuvre du robinet. Un socle 14 ferme la partie inférieure du corps 10.

Dans l'exemple représenté, le corps 10 du robinet comporte un canal d'admission radial 16, un canal de sortie radial 18 dans le prolongement du canal 16 et un second canal de sortie radial 20 disposé perpendiculairement par rapport aux canaux 16 et 18.

La figure 2 montre les détails de la constitution d'un mode de réalisation préféré de ce robinet. Comme le montre cette figure, le corps 10 est traversé par un alésage à plusieurs décrochements et qui se présentent de façon symétrique par rapport à un étranglement annulaire central 28 qui se trouve entre deux chambres 22, 24 sensiblement cylindriques et symétriques l'une part rapport à l'autre. Le canal d'admission 16 s'ouvre dans un canal axial 26 reliant les chambres 22 et 24 à travers l'étranglement 28. Les deux canaux de sortie partent de chacune des chambres 22, 24, dans l'exemple représenté, le canal 18 quitte la chambre 24, tandis que le canal 20, non visible sur la figure 2, sort de la chambre 22.

L'organe de fermeture est constitué par deux pistons symétriques 30, 32 se trouvant respectivement dans les chambres 22, 24 et reliés entre eux à travers le canal axial 26 par une tige 34.

Les faces intérieures des pistons 30, 32 comportent des surfaces d'étanchéité qui, dans l'exemple représenté, sont constituées par des joints toriques 36, 38 en matière synthétique, telle que du Kel-F (marque de commerce) et qui peuvent être maintenus en place par exemple au moyen de bourrelets prévus sur la tige 34. Au lieu de prévoir des joints toriques, il est également possible de concevoir cette surface des pistons comme surface d'étanchéité conique en métal mou. Les surfaces annulaires de l'étranglement 28 se trouvant en face des pistons 30, 32 forment les sièges de ceux-ci et, à cet effet, sont de préférence conçus comme surface tronconique s'ouvrant en direction de chacune des chambres 22, 24 dont elles forment le fond.

Ce compartiment central du robinet 10 formé par les deux chambres 22, 24 et le canal 26 est fermé de part et d'autre par deux membranes métalliques flexibles 40, 42. La membrane supérieure 40 est coincée par sa région périphérique entre un rebord annulaire intérieur du corps 10 et une douille sensiblement cylindrique 44 vissée dans la partie supérieure du corps 10. La tête 12 est, à son tour, vissée dans cette douille 44.

Dans l'exemple représenté, cette tête 12 comporte des moyens pneumatiques pour la manoeuvre du robinet. A cet effet, la tête 12 est conçue sous forme de cylindre dans lequel coulisse un piston 46 en forme de disque qui est relié par l'intermédiaire d'une tige axiale 48 traversant la tête 12 et un presse-étoupe 50 à la membrane 40.

La membrane inférieure 42 est également tendue par sa partie périphérique entre un rebord intérieur du corps 10 et une douille cylindrique 54 vissée dans la partie inférieure de ce corps 10. Un socle 14 pourvu d'un trou d'aération 62 est vissé sur la douille 54 et ferme la partie inférieure du robinet. A l'intérieur de la douille 54 se trouve un ressort hélicoïdal 58 prenant appui sur le socle 14 et exerçant, du côté opposé, son action sur la membrane 42 par l'intermédiaire d'un cylindre 60.

La tête du cylindre 60, ainsi d'ailleurs que celle de la tige 48, qui sont respectivement en contact avec les membranes 42 et 40, sont de préfèrence bombées.

Lorsque le dispositif de commande pneumatique n'est pas actionné, l'organe de fermeture constitué par les deux pistons 30 et 32 subit à travers la membrane inférieure 42 et par l'intermédiaire du cylindre 60 l'action du ressort 58, de sorte que le piston 32 est maintenu sur son siège, alors que le piston 30 est soulevé. Par conséquent, la communication entre le canal d'admission 16 et le canal de sortie 20 est ouverte, tandis que le passage entre le canal 16 et le canal de sortie 18 est fermé. Inversement, lorsque le disque 46 est soumis à de la pression, le poussoir 48 descend et exerce, à travers la membrane 40, son action sur l'organe de fermeture contre l'action du ressort 58. Cette manoeuvre applique le piston 30 sur son siège, fermant ainsi le passage entre le canal 16 et le canal 20, alors que le piston 32 ouvre le passage entre le canal d'admission 16 et le canal de sortie 18.

Dans l'exemple représenté, les deux pistons 30, 32 sont pourvus chacun d'un segment circulaire 62, 64. Toutefois, ceci n'est qu'une mesure facultative pour favoriser le guidage des deux pistons 30, 32 dans leur chambre 22, 24. Il est par exemple possible, dans le but de supprimer tout contact de friction et d'éliminer encore davantage tous les risques de dégagement de particules dans les gaz, de ne pas prévoir ces segments 62, 64 sur les pistons, et d'assurer simplement leur guidage et leur positionnement par la pression qui leur est appliquée de part et d'autre par les membranes 40, 42 sous l'action de la tige 48 et du ressort 58. Il est également possible de rendre les têtes opposées des pistons 30, 32 solidaires des membranes adjacentes 40, 42, par exemple au moyen de soudures ou de rivets.

Un autre moyen pour assurer un positionnement stable des pistons 30 et 32 entre leurs membranes 40 et 42, est de profiler la surface de leur tête de façon complémentaire au profil des surfaces opposées de la tige 48 ou du cylindre 60. Dans l'exemple représenté ces surfaces étant bombées, il suffirait de prévoir des têtes concaves pour les pistons 30 et 32.

Dans l'exemple représenté la manoeuvre du robinet est réalisée par voie pneumatique. Quoique ceci soit une solution avantageuse, surtout lorsque les gaz sont toxiques et corrosifs, il est possible de prévoir d'autres moyens de manoeuvre, par exemple mécaniques, électromécaniques, etc.

Le robinet illustré sur les figures sert à aiguiller le gaz soit dans le canal de sortie 18 soit dans le canal de sortie 20. Autrement dit, il n'y a pas de fermeture. Il est toutefois également possible de ne prévoir qu'un seul canal de sortie, par exemple le canal 18. Le robinet assure, dans ce cas, soit l'ouverture du passage vers le canal 18, soit la fermeture de ce passage. Il est également possible d'inverser les fonctions des canaux d'admission et de sortie.

Il est par ailleurs possible de prévoir une position centrale pour l'organe de fermeture, dans laquelle p.ex. le canal d'admission peut alimenter deux canaux de sortie. A cet effet il suffit de prévoir p.ex. à l'intérieur du ressort 58 un moyen de limitation du mouvement de compression de ce ressort.

Il reste à noter que le terme "membrane" utilisé dans la présente demande doit être compris dans son sens le plus large, englobant notamment des membranes soufflet.

**Revendications**

1. - Robinet pour gaz comprimés ou liquéfiés, comprenant un corps (10) renfermant un organe de fermeture avec au moins une surface d'étanchéité à l'intersection d'au moins un canal d'admission (16) et d'au moins un canal de sortie des gaz (18), un moyen de manoeuvre extérieur (12) relié à travers le corps (10) audit organe de fermeture pour déplacer celui-ci contre l'action d'un ressort (58) entre une position d'ouverture et une position de fermeture, **caractérisé** en ce que l'organe de fermeture est monté, de façon flottante, entre deux membranes d'étanchéité métalliques flexibles (40, 42), dont l'une subit l'action du moyen de manoeuvre (12) par l'intermédiaire d'une tige axiale (48) et dont l'autre subit l'action d'un ressort (58) du côté opposé à celui dudit organe de fermeture.

2. - Robinet selon la revendication 1, **caractérisé** en ce que l'organe de fermeture est constitué de deux pistons symétriques (30, 32) reliés entre eux par une tige (34) à travers un étranglement (28) du corps (10) du robinet au niveau desdits canaux (16, 18) et en ce que les deux pistons (30, 32) se trouvent dans des chambres (22, 24) sensiblement cylindriques de part et d'autre dudit étranglement (28).

3. - Robinet selon la revendication 2, **caractérisé** en ce qu'au moins un desdits pistons (30, 32) est pourvu d'une surface d'étanchéité coopérant avec un siège formé par le bord juxtaposé dudit étranglement (28).

4. - Robinet selon la revendication 2, **caractérisé** en ce que les deux pistons (30, 32) sont pourvus d'une surface d'étanchéité (36, 38) coopérant chacune avec un siège formé par le bord juxtaposé dudit étranglement (28).

5. - Robinet selon l'une des revendications 3 ou 4, **caractérisé** en ce que chaque siège est formé par une surface tronconique qui s'ouvre dans la chambre du piston associé.

6. - Robinet selon l'une quelconque des revendications 3 à 5, **caractérisé** en ce que les surfaces d'étanchéité sont en métal mou.

7. Robinet selon l'une quelconque des revendications 3 à 5, **caractérisé** en ce que les surfaces d'étanchéité sont en matière synthétique.

8. - Robinet selon l'une quelconque des revendications 2 à 7, **caractérisé** en ce que le ou les canaux d'admission (16) pénètrent dans le corps (10) du robinet au niveau de l'étranglement (28) et en ce que le ou les canaux de sortie (18, 20) quittent le corps (10) du robinet au niveau des chambres (22, 24) ou vice versa.

9. - Robinet selon la revendication 1, **caracté risé** en ce que la membrane (42) subissant l'action d'un ressort est reliée à celui-ci par un cylindre (60) à tête bombée.

10. - Robinet selon l'une quelconque des revendications 2 à 9, **caractérisé** en ce que le guidage de l'organe de fermeture est assuré par des segments circulaires (62, 64) sur les pistons (30, 32).

11. - Robinet selon l'une quelconque des revendications 2 à 9, **caractérisé** en ce que le guidage de l'organe de fermeture est assuré par une liaison entre chaque piston (30, 32) et sa membrane (40, 42) dont il subit l'action.

12. - Robinet selon l'une quelconque des revendications 2 à 9, **caractérisé** en ce que le guidage de l'organe de fermeture est assuré par son positionnement entre les membranes opposées (40, 42) et en ce que les surfaces en contact avec les membranes (40, 42) de part et d'autre de celles-ci présentent des profils complémentaires.

Fig.1

12

10

20

16

18

14

Fig. 2

46

12

48

50

44

10

40

62

22

30

36

26

18

16

34

28

24

38

64

32

42

54

60

58

14

62